# EUROPÄISCHE PATENTANMELDUNG

(11) **EP 3 337 238 A1**
(43) Veröffentlichungstag der Anmeldung: **20.06.2018**
(21) Anmeldenummer: 17206600.3
(22) Anmeldetag: 12.12.2017
(51) Int. Cl.: H04W 36/22, H04W 36/32, H04W 28/02

(54) **ÜBERGABE MIT PRÄDIKTION FÜR EINE KAPAZITÄTSPLANUNG EINER NACHGELAGERTEN MOBILFUNKZELLEN**

(30) Priorität: 15.12.2016 DE 102016124519
(71) Anmelder: Deutsche Telekom AG, 53113 Bonn (DE)
(72) Erfinder: SINNING, Thorsten, 52080 Aachen (DE)
(74) Vertreter: Raible Deissler Lehmann Patentanwälte PartG mbB

(57) **Zusammenfassung**

Die Erfindung betrifft ein Verfahren zur Übergabe mindestens einer in einem zellularen, eine Vielzahl von Zellen umfassenden Mobilfunknetz bestehenden Mobilfunkverbindung von einer ersten Zelle (10) zu einer nachgelagerten Zelle (11, 12), bei dem die mindestens eine Mobilfunkverbindung ausgehend von einem Mobilfunkendgerät (15) in einem Fahrzeug in der ersten Zelle (10) mittels mindestens eines Parameters signalisiert wird, wobei ein Standort und Bewegungsparameter des Mobilfunkendgeräts (15) aufgezeichnet und auf Basis des aufgezeichneten Standorts und der aufgezeichneten Bewegungsparameter und eines Datenvolumens der mindestens einen Mobilfunkverbindung eine Vorhersage von potentiell nachgelagerten Zellen (11, 12) für deren jeweilige Kapazitätsplanung vorgenommen wird.

## Beschreibung

Die vorliegende Erfindung betrifft ein Verfahren und ein System zur Übergabe mindestens einer in einem zellularen, eine Vielzahl von Zellen umfassenden Mobilfunknetz bestehenden Mobilfunkverbindung von einer ersten Zelle zu einer nachgelagerten Zelle.

Die vorliegende Erfindung bezieht sich ganz allgemein auf das Gebiet des Mobilfunks, insbesondere auf das Gebiet einer Übergabe von Mobilfunkverbindungen von Mobilfunkteilnehmern innerhalb eines zellularen Mobilfunknetzes bei einem Zellwechsel.

In zellularen Mobilfunknetzen ist eine Übergabe von Mobilfunkverbindungen von Teilnehmern, die sich von einer Zelle in einen Versorgungsbereich einer angrenzenden Zelle begeben, als "Handover" bekannt.

Ein Zellwechsel wird dabei in der Regel so durchgeführt, dass die entsprechende Mobilfunkverbindung von einer zur anderen Zelle bei Bedarf übergeben wird. Bedarf ist dabei dadurch definiert, dass mindestens ein Qualitätsparameterals Maßstab genommen wird, um eine Versorgungsleistung einer Zelle zu messen. Ergeben sich Alternativen bei einer Versorgung, d. h. stehen potentiell mehrere Zellen zur Verfügung, zu denen eine Übergabe einer jeweiligen Mobilfunkverbindung stattfinden könnte, wird die Mobilfunkverbindung in der Regel an eine an die aktuell von der Mobilfunkverbindung genutzte Zelle geographisch angrenzende Zelle übergeben, welche eine beste Referenz-Feldstärke oder eine beste Referenz-Signalstärke aufweist.

Das funktioniert in der Regel reibungslos, wenn genügend Übertragungskapazitäten in dem entsprechenden zellularen Mobilfunknetz vorhanden sind.

Das Verfahren des Handover ist zum Beispiel bekannt aus der Veröffentlichung von Gregory P. Pollhi in IEEE Communications Magazine March 1996 S 82 ff.

Er beschreibt das Handover von einer ersten Zelle bei Verschlechterung eines Qualitätsparameters, insbesondere der Feldstärke und den Wechsel in eine der angrenzenden Zellen, wobei zusätzlich eine Hysterese-Feldstärke definiert wird, um ein sofortiges oder dauerndes Wechseln der Zellen in Randbereichen der Zellabdeckungen zu vermeiden.

Eine Aufgabe der vorliegenden Erfindung ist es, eine Planung eines Zellwechsels in Bezug auf eine Kapazitätseffizienz zu verbessern.

Gelöst wird diese Aufgabe durch ein Verfahren und ein System mit den Merkmalen der unabhängigen Patentansprüche. Ausgestaltungen sind den jeweiligen Unteransprüchen und der nachfolgenden Beschreibung zu entnehmen.

Patentanspruch 1 betrifft ein Verfahren zur Übergabe mindestens einer Mobilfunkverbindung von einer ersten Zelle zu einer der ersten Zelle nachgelagerten Zelle in einem zellularen Mobilfunknetz mit einer Vielzahl von Zellen, bei dem die Mobilfunkverbindung von einem sich bewegenden und sich aktuell in der ersten Zelle des Mobilfunknetzes befindenden Mobilfunkendgerät gehalten wird, wobei das Verfahren mindestens die folgenden Schritte umfasst:
- Signalisieren der mindestens einen Mobilfunkverbindung in der ersten Zelle mittels mindestens eines Parameters,
- Aufzeichnen eines Standorts und mindestens eines Bewegungsparameters des Mobilfunkendgeräts in der ersten Zelle,
- auf Basis des aufgezeichneten Standorts und des mindestens einen aufgezeichneten Bewegungsparameters und eines Datenvolumens der mindestens einen Mobilfunkverbindung, Vorhersagen von mindestens einer potentiell nachgelagerten Zelle für deren Kapazitätsplanung.

Es wird somit ein Verfahren zur Übergabe mindestens einer in einem zellularen, eine Vielzahl von Zellen umfassenden Mobilfunknetz bestehenden Mobilfunkverbindung von einer ersten Zelle zu einer nachgelagerten Zelle bereitgestellt. Bei dem erfindungsgemäßen Verfahren wird die mindestens eine von einem Mobilfunkendgerät ausgehende Mobilfunkverbindung in der ersten Zelle mittels mindestens eines Parameters signalisiert, wobei ein Standort und Bewegungsparameter des Mobilfunkendgeräts aufgezeichnet und auf Basis des aufgezeichneten Standorts und der aufgezeichneten Bewegungsparameter sowie eines aktuellen Datenvolumens der mindestens einen Mobilfunkverbindung eine Vorhersage von potentiell, d. h. für die Übernahme der mindestens einen Mobilfunkverbindung zur Verfügung stehenden, nachgelagerten Zellen für deren jeweilige Kapazitätsplanung vorgenommen wird.

Unter einer nachgelagerten Zelle ist im Rahmen der vorliegenden Beschreibung eine Zelle zu verstehen, die die Mobilfunkverbindung zeitlich nach der ersten Zelle übernimmt.

Die der Erfindung zugrunde liegende Aufgabe wird demnach durch ein Verfahren zur Planung einer Übergabe einer zellularen von einem Mobilfunkendgerät gehaltenen Mobilfunkverbindung gelöst, bei dem eine Qualität der Mobilfunkverbindung in einer ersten Zelle mittels mindestens eines Parameters signalisiert wird, wobei der Standort und Bewegungsparameter des Mobilfunkendgeräts aufgezeichnet werden, wobei aufgrund von Daten des Standorts und der Bewegungsparameter des Mobilfunkendgeräts eine Prädiktion für eine Kapazitätsplanung der nachgelagerten Mobilfunkzellen für einen Zellwechsel des Mobilfunkendgeräts bzw. der von diesem ausgehenden Mobilfunkverbindung vorgenommen wird. Auf Basis des Standorts und der Bewegungsparameter des Mobilfunkendgeräts in Zusammenschau mit einer bekannten und abrufbar hinterlegten geographischen Anordnung der Zellen kann vorhergesagt bzw. abgeschätzt werden, wann, d. h. zu welchem Zeitpunkt bzw. nach welcher Zeitdauer, ausgehend von einem aktuellen Zeitpunkt ein Zellwechsel stattfinden wird.

Die Kapazitätsplanung umfasst dabei, nicht abschließend, alle Aufgaben die durch die Mobilfunkverbindung angeforderte Datenrate zum vorher geschätzten Zeitpunkt bereitzustellen. Kapazitätsplanung umfasst eine Reservierung der notwendigen Frequenzen, Kanäle oder Zeitabschnitte zur Übertragung der Daten der Mobilfunkverbindung über die Luft. Es umfasst ferner die Maßnahmen, Rechnen- oder Verarbeitungskapazitäten in einer entsprechenden Vermittlungstechnik bereitzuhalten, Übertragungswege, Latenzzeiten, Zwischenspeicher in geeignetem Maß und zur geeigneten Zeit bereitzustellen oder eine entsprechende Bereitstellung vorauszuplanen.

Eine nachgelagerte Zelle befindet sich in der Regel in einer geographischen Nähe, insbesondere in einer unmittelbaren geographischen Nachbarschaft zu der ersten Zelle. Ferner befindet sich eine nachgelagerte Zelle in einem geographischen Gebiet, in welches sich das Mobilfunkendgerät ausgehend von dem geographischen Gebiet, das von der ersten Zelle abgedeckt ist, hineinbewegt.

Eine potentiell nachgelagerte Zelle ist eine Zelle, die potentiell für eine Übernahme der Mobilfunkverbindung in Frage kommt, letztlich diese aber nicht zwingend übernehmen muss. Bei einer erfindungsgemäß vorgesehenen Vorhersage bzw. Prädiktion lassen sich nur Wahrscheinlichkeiten bezüglich der zukünftigen Bewegung des Mobilfunkendgeräts und auch bezüglich des zukünftigen Datenvolumens der zu übergebenden Mobilfunkverbindung auf Basis der aktuell zur Verfügung stehenden Bewegungsparameter des Mobilfunkendgeräts bzw. des aktuellen Datenvolumens der zu übergebenden Mobilfunkverbindung bestimmen. Wo sich das Mobilfunkendgerät letztlich zu einem bestimmten zukünftigen Zeitpunkt dann tatsächlich befindet und welches Datenvolumen dann tatsächlich über die Mobilfunkverbindung zu transportieren ist, ist unbestimmt und kann nur über eine Zuweisung von Wahrscheinlichkeiten abgeschätzt werden.

Eine potentiell nachgelagerte Zelle liegt ferner in einem geographischen Bereich bzw. deckt diesen ab, von welchem aufgrund des Standorts und der Bewegungsparameter des Mobilfunkendgeräts angenommen werden kann, dass sich das Mobilfunkendgerät eventuell, d. h. mit einer vorgegebenen Wahrscheinlichkeit von bspw. >80 %, in diesen hineinbewegt.

Darüber hinaus beinhaltet die Vorhersage eine Bestimmung der von den potentiell nachgelagerten Zellen bereitzuhaltenden Kapazitäten für eine eventuelle Übernahme der Mobilfunkverbindung auf Basis des aktuellen Datenvolumens der zu übergebenden Mobilfunkverbindung.

In möglicher Ausgestaltung wird die Vorhersage der potentiell nachgelagerten Zellen, d. h. derjenigen Zellen, die für eine Übernahme der mindestens einen Mobilfunkverbindung zur Verfügung stehen, auf Basis einer Vorhersage eines Bewegungsmusters des Mobilfunkendgeräts vorgenommen. Das Mobilfunkendgerät kann sich dabei in einem Fahrzeug befinden, so dass seine Bewegung bzw. sein Bewegungsmuster direkt korreliert ist mit der Bewegung des jeweiligen Fahrzeugs. Bei dem Fahrzeug, in welchem sich das Mobilfunkendgerät befinden kann bzw. mit welchem das Mobilfunkendgerät mitfährt, kann es sich bspw. um ein Personenkraftfahrzeug, einen Bus, einen Zug oder auch um ein Flugzeug handeln. In Abhängigkeit von einer von dem jeweiligen Fahrzeug gefahrenen Geschwindigkeit kommt es in mehr oder weniger zeitlich kurz aufeinanderfolgenden Zeitpunkten zu einem Handover der Mobilfunkverbindung, d. h. zu einer Übergabe der Mobilfunkverbindung von einer Zelle zu einer nachgelagerten Zelle. Bei einem Tempo von bspw. 250 km/h und einer Zellenlänge von bspw. 1000 m wäre alle 15 s ein Handover, d. h. ein Zellwechsel erforderlich. Das Zusammenwirken von hohen gefahrenen Geschwindigkeiten, die bei schnellen Fahrzeugen, insbesondere bspw. bei Hochgeschwindigkeitszügen und/oder bei Flugzeugen auftreten, und hohen Frequenzen der vorhandenen Mobilfunknetze verursacht zudem eine weitere zu berücksichtigende Randerscheinung, nämlich das Auftreten des Doppler-Effekts, der zu Frequenzverschiebungen führen kann und ausgeglichen werden muss, da er Auswirkungen auf ein Fortbestehen einer Mobilfunkverbindung haben kann.

Befindet sich das Mobilfunkendgerät bspw. in einem Zug, einem Bus oder einem Flugzeug, kommen neben der eigentlichen Bewegung des Fahrzeugs und damit des Mobilfunkendgeräts noch weitere zu beachtende Faktoren hinzu, nämlich, dass neben der von dem Mobilfunkendgerät aufgebauten Mobilfunkverbindung ggf. zeitgleich eine Vielzahl weiterer Mobilfunkverbindungen ausgehend von anderen Mobilfunkendgeräten aufgebaut sind und zeitgleich unterstützt werden wollen.

Mit der erfindungsgemäß vorgesehenen Vorhersage kann ein Handover zwischen den Zellen optimiert werden, damit der Handover stets strikt entlang eines jeweiligen Streckenverlaufs erfolgt. Handelt es sich bei dem Fahrzeug bspw. um einen Zug, so ist zu beachten, dass Mobilfunknetze an Bahnstrecken hohen Spitzenbelastungen ausgesetzt sind, da bspw. ein ICE mit 14 Waggons rund 800 Sitzplätze aufweist. Fährt ein ICE an einer Basisstation einer Zelle vorbei, tauchen auf einen Schlag mehrere hundert Mobilfunkendgeräte in einer Zelle auf, die nach kurzer Zeit wieder in Nachbarzellen "umsiedeln". Die Zahl der Nutzer verdoppelt sich, wenn sich zwei ICEs auf der Strecke begegnen. Eine weitere Schwierigkeit können sogenannte Tunnelstrecken verursachen. Hier muss für einen sogenannten Tunnelfunk gesorgt werden, indem bspw. die jeweiligen Tunnel mit GSM-Basisstationen ausgestattet sind. Außerhalb eines jeweiligen Tunnels ist dabei in der Regel eine Kopfstation installiert, die als Basisstation für den gesamten Tunnel dient. Die Sendeanlagen im Tunnel werden in der Regel über ein optisches Repeater-System angesteuert. Ein Tunnel stellt netztechnisch dabei eine einzige Zelle dar, wobei alle Sender auf der Strecke über ein Glasfaserkabel mit der Basisstation verbunden sind und das gleiche Signal reproduzieren. Dadurch werden Handover innerhalb des Tunnels verhindert.

In weiterer Ausgestaltung werden Kommunikations-Verkehrsdaten über eine durch die mindestens eine Mobilfunkverbindung belegte Bandbreite und eine Qualität der Mobilfunkverbindung aufgenommen und an die potentiell nachgelagerten Zellen übergeben, die gemäß der Vorhersage in einer auf Basis des aufgezeichneten Standorts und der aufgezeichneten Bewegungsparameter des Mobilfunkendgeräts ermittelten wahrscheinlichen Bewegungsrichtung und in einer entsprechend wahrscheinlichsten Zellübergabezeit liegen.

Die Vorhersage umfasst in der Regel die unmittelbar nachgelagerte bzw. nachfolgende Zelle. Allerdings gibt es auch Abschnitte des zellularen Mobilfunknetzes, in denen es sinnvoll ist, aufgrund einer dort vorliegenden Zelldichte eine rasche Abfolge von Handovervorgängen zu weiteren Zellen zu planen bzw. vorherzusagen. Gegebenenfalls lässt auch die Reisegeschwindigkeit eines Fahrzeugs und die vorausssichtliche Wegstrecke die Vorausplanung bzw. Vorhersage von Kapazitäten über mehrere Zellen hinweg zu. Dieses ist der Fall bei Schnellzügen mit einer festen Fahrstrecke, bei hoher Geschwindigkeit und einem großen Datenkapazitätsbedarf. Es ist auch der Fall bei Fahrzeugen auf Schnellstraßen in einem sonst dünn besiedelten Gebiet. Auch in diesen Fällen kann das erfindungsgemäße Verfahren in weiterer Ausgestaltung eingesetzt werden.

Das bedeutet, dass das erfindungsgemäße Verfahren vorsieht, dass bspw. die erste Zelle Kommunikations-Verkehrsdaten über belegte Bandbreite und Qualität der Mobilfunkverbindung aufnimmt und diese Informationen und Prädiktionsdaten an potentiell nachgelagerte Zellen in der wahrscheinlichen Bewegungsrichtung und der wahrscheinlichsten Zellübergabezeit gemäß der Prädiktion übergibt. Anhand des aktuellen Standorts und der aktuellen Bewegungsparameter des Mobilfunkendgeräts kann abgeschätzt werden, in welche Richtung sich das Mobilfunkendgerät wie schnell bewegt und somit wann, d. h. zu welchem jeweiligen Zeitpunkt, sich das Mobilfunkendgerät in welcher der in der geschätzten Bewegungsrichtung hintereinander liegenden Zellen befinden wird. Somit kann nicht nur für die unmittelbar nachgelagerte Zelle, sondern auch für die danach noch folgenden Zellen eine Vorhersage realisiert werden. Dies kann zwar nur eine Schätzung sein, da bspw. bei einer abrupten nicht vorhersehbaren Bewegungsrichtungsänderung des Mobilfunkendgeräts, die Abfolge der vorhergesagten Zellwechsel nicht mehr stimmen muss, doch kann die erfindungsgemäß vorgesehene Prädiktion im Regelfall zu einer Verbesserung der Kapazitätsplanung für einen Zellwechsel führen. In Abhängigkeit der Geschwindigkeit, mit welcher sich das Mobilfunkendgerät bewegt und/oder in Abhängigkeit von der Struktur des zellularen Mobilfunknetzes im Umfeld des aktuellen Standorts und/oder der abgeschätzten durch das Mobilfunkendgerät zurückzulegenden Strecke, können für einen potentiellen Zellwechsel zu einem jeweiligen Zeitpunkt mehrere nachgelagerte Zellen bezüglich ihrer jeweiligen Kapazitätsplanung für eine Übernahme der Mobilfunkverbindung zu diesem Zeitpunkt, d. h. gleichzeitig, vorbereitet werden. Zwar übernimmt bei Eintritt des Zellwechsels dann nur eine der mehreren zeitgleich vorbereiteten Zellen die Mobilfunkverbindung, doch kann dadurch auch eine abrupte Bewegungsrichtungsänderung des Mobilfunkendgeräts bis zu einer definierten Wahrscheinlichkeit abgefangen, d. h. eingeplant, werden. Unter Kommunikations-Verkehrsdaten, auch Verbindungsdaten oder Verkehrsranddaten genannt, sind im Rahmen der vorliegenden Offenbarung technische Informationen zu verstehen, die bei einer Nutzung eines Telekommunikationsdienstes, insbesondere von Telefonie oder Internetnutzung, bei einem jeweiligen Telekommunikationsunternehmen bzw. einem Provider anfallen, und von diesem erhoben, gespeichert, verarbeitet, ermittelt oder genutzt werden. Zu den Kommunikations-Verkehrsdaten gehören im Allgemeinen ein in Anspruch genommener Telekommunikationsdienst, eine Nummer oder Kennung von beteiligten Anschlüssen, personenbezogene Berechtigungskennung, eine Kartennummer bei Verwendung von Kundenkarten, Standortdaten bei Mobilfunkendgeräten und Beginn und Ende einer jeweiligen Mobilfunkverbindung, wie Datum und Uhrzeit, und ferner dabei übermittelte Datenmengen bzw. Datenvolumina.

In weiterer Ausgestaltung stellen die nachgelagerten Zellen jeweilig eine Kapazität gemäß der Vorhersage bereit, um bei Eintritt einer Übernahme der Mobilfunkverbindung, d. h. eines "Handovers", eine garantierte Qualität der mindestens einen Mobilfunkverbindung bereitzustellen bzw. zu garantieren.

In weiterer Ausgestaltung wird die Vorhersage der potentiell, d. h. für die Übernahme der mindestens einen Mobilfunkverbindung zur Verfügung stehenden, nachgelagerten Zellen, auf Basis einer Vorhersage eines Bewegungsmusters des Mobilfunkendgeräts und die jeweilige Kapazitätsplanung für die jeweiligen nachgelagerten Zellen alternativ oder zusätzlich zu der ersten Zelle von einer zentralen Einheit vorgenommen. Das bedeutet, dass die Aufnahme und Speicherung der für die Vorhersage des Bewegungsmusters benötigten Daten sowie die Kapazitätsplanung für die nachgelagerten Zellen von der ersten Zelle vorgenommen werden können oder alternativ dazu auch von einer zentralen Einheit, wie bspw. eines sogenannten HLR. Der HLR (Home Location Register) kann auch zusätzlich zu der ersten Zelle die entsprechenden Daten aufnehmen, speichern und die Kapazitätsplanung für die potentiell für die Übernahme der mindestens einen Mobilfunkverbindung zur Verfügung stehenden Zellen steuern. Das heißt, die zentrale Einheit bzw. insbesondere der HLR kann die Prädiktion der Bewegung des Mobilfunkendgeräts sowie die Planung der Bereitstellung der Kapazitäten der nachgelagerten Zellen übergreifend steuern. Es ist auch denkbar, dass die erste Zelle bspw. die für die Vorhersage des Bewegungsmusters des Mobilfunkendgeräts benötigten Daten aufnimmt und dann an die zentrale Einheit weiterleitet, die dann sowohl die Vorhersage des Bewegungsmusters als auch die Kapazitätsplanung für die auf Basis des Bewegungsmusters bestimmten potentiell nachgelagerten Zellen steuert.

In weiterer Ausgestaltung werden zur Vorhersage des Bewegungsmusters des Mobilfunkendgeräts geographische Daten von einem das Mobilfunkendgerät umgebenden Umfeld verwendet. Das bedeutet, dass bspw. mittels eines Satellitennavigationssystems, bspw. GPS, Standortdaten des Mobilfunkendgeräts von dem Mobilfunkendgerät aufgenommen, in einem Prozessor des Mobilfunkendgeräts zu einer Ortskoordinate, d. h. dem Standort, ausgewertet und zusammen mit den Bewegungsparametern, wie Geschwindigkeit und Bewegungsrichtung, zur Vorhersage einer Bewegung des Mobilfunkendgeräts genutzt werden, um damit ein Bewegungsmuster des Mobilfunkendgeräts vorherzusagen bzw. zu generieren. Anhand der geographischen Daten des Umfelds des jeweiligen Mobilfunkendgeräts kann auch gleichzeitig ermittelt werden, aufgrund des Aufbaus des zellularen Mobilfunknetzes, welche Zellen überhaupt für eine Übernahme der Mobilfunkverbindung potentiell in Frage kommen. Das heißt, davon können die potentiell nachgelagerten Zellen zu der ersten Zelle ermittelt bzw. berechnet und somit vorhergesagt werden.

In möglicher Ausgestaltung werden die geographischen Daten von einer abrufbar hinterlegten Straßenkarte abgeleitet. Alternativ zu einer Straßenkarte kann es sich auch um eine allgemein als Umgebungskarte bezeichnete Karte oder im Fall, dass sich das Mobilfunkendgerät in einem fahrenden Zug befindet, speziell um eine Schienennetzkarte handeln.

Die geographischen Daten bzw. die Kartendaten werden in dem System zur Steuerung des Mobilfunknetzes, d.h. in der zentralen Systemsteuerung des Mobilfunknetzes, hinterlegt und dort ausgewertet. Die Datenauswertung dient dazu, eine optimierte Vorhersage über die Bewegungsdaten und die an die erste Zelle angrenzenden Zellen zu erhalten. Ferner können zugeschnittene Kartendaten auch in Unterabteilungen des Steuerungssystems oder in den Mobilfunkstationen selbst, welche die jeweiligen Zellen aufspannen, hinterlegt sein, um die Kapazitätsplanung zu dezentralisieren, zu vereinfachen oder im Falle eines Netzausfalles redundant zu gestalten.

Die vorliegende Erfindung betrifft ferner ein System zur Steuerung einer Übergabe mindestens einer in einem zellularen, eine Vielzahl von Zellen umfassenden Mobilfunknetz bestehenden Mobilfunkverbindung von einer ersten Zelle zu einer nachgelagerten Zelle. Dabei geht die Mobilfunkverbindung von einem Mobilfunkendgerät in einem Fahrzeug aus bzw. wird die Mobilfunkverbindung von dem Mobilfunkendgerät gehalten. Das erfindungsgemäße System umfasst mindestens eine Funktionseinheit, die dazu ausgelegt bzw. konfiguriert ist, Signale zu einem Standort und zu Bewegungsparametern des Mobilfunkendgeräts sowie zu Kommunikations-Verkehrsdaten der Mobilfunkverbindung aufzuzeichnen. Ferner soll die Funktionseinheit dazu ausgelegt sein, auf Basis des aufgezeichneten Standorts und der aufgezeichneten Bewegungsparameter und eines Datenvolumens der mindestens einen Mobilfunkverbindung eine Vorhersage von potentiell nachgelagerten Zellen für deren jeweilige Kapazitätsplanung vorzunehmen.

Das bedeutet, dass die mindestens eine Funktionseinheit des Systems dazu ausgelegt ist, im Prinzip zwei Vorhersagen vorzunehmen, nämlich zum einen eine Vorhersage eines Bewegungsmusters des Mobilfunkendgeräts und auf Basis des Bewegungsmusters von potentiell der ersten Zelle nachgelagerten Zellen, und zum anderen eine Vorhersage der für die zu übertragende Mobilfunkverbindung benötigte Kapazität, die von der jeweilig nachgelagerten Zelle, die die Mobilfunkverbindung übernimmt, bereitzustellen ist. Dazu werden Signale zu Bewegungsdaten des Mobilfunkendgeräts und zu Kommunikations-Verkehrsdaten der durch das Mobilfunkendgerät gehaltenen Mobilfunkverbindung aufgenommen und ausgewertet. Auf Grundlage dieser Auswertung werden in dem zellularen Mobilfunknetz vorhandenen potentiell nachgelagerten Zellen Datenverkehrskapazitäten nach Wahrscheinlichkeiten zugewiesen, bevor ein Zellwechsel der Mobilfunkverbindung des Mobilfunkendgeräts vorgenommen wird.

Das erfindungsgemäße System ist dadurch gekennzeichnet, dass die Funktionseinheit dynamisch Kapazitäten den potentiell nachgelagerten Zellen des zellularen Mobilfunknetzes aufgrund einer Wahrscheinlichkeit für den vorzunehmenden Zellwechsel zuweist. Bei der Funktionseinheit kann es sich um eine zentrale Einheit oder um eine in der aktuellen, d. h. der ersten Zelle verortete Einheit handeln. Es ist auch denkbar, dass sich die Aufgaben der erfindungsgemäß vorgesehenen mindestens einen Funktionseinheit auf zwei oder mehrere Funktionseinheiten aufteilen. Beispielsweise kann eine Funktionseinheit zur Aufnahme der Kommunikations-Verkehrsdaten eine zentrale, d. h. übergeordnete Funktionseinheit des zellularen Mobilfunknetzes sein, die keiner konkreten Zelle zugeordnet ist, und eine andere Funktionseinheit, die auf Basis dieser Daten die Vorhersage und damit die Kapazitätsplanung für die potentiell nachgelagerten Zellen macht, kann in der ersten Zelle, d. h. in der Zelle, in der sich das Mobilfunkendgerät aktuell befindet, verortet sein. Alternativ dazu kann eine Funktionseinheit, bspw. eine in der ersten Zelle verortete Funktionseinheit zur Aufnahme aller benötigten Daten, wie Standort, Bewegungsmuster und Kommunikations-Verkehrsdaten dezentral, d. h. insbesondere in der ersten Zelle lokalisiert sein, während eine andere Funktionseinheit, die auf Basis des Standorts und der Bewegungsparameter des Mobilfunkendgeräts und eines Datenvolumens der Mobilfunkverbindung eine Vorhersage bezüglich der potentiell nachgelagerten Zellen macht und diesen entsprechend der für sie jeweilig vorhergesagten Wahrscheinlichkeit für eine Übernahme der Mobilfunkverbindung Datenverkehrskapazitäten zuweist, zentral, bspw. in einem HLR lokalisiert sein kann, wobei beide Funktionseinheiten in kommunikativer Verbindung zueinander stehen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

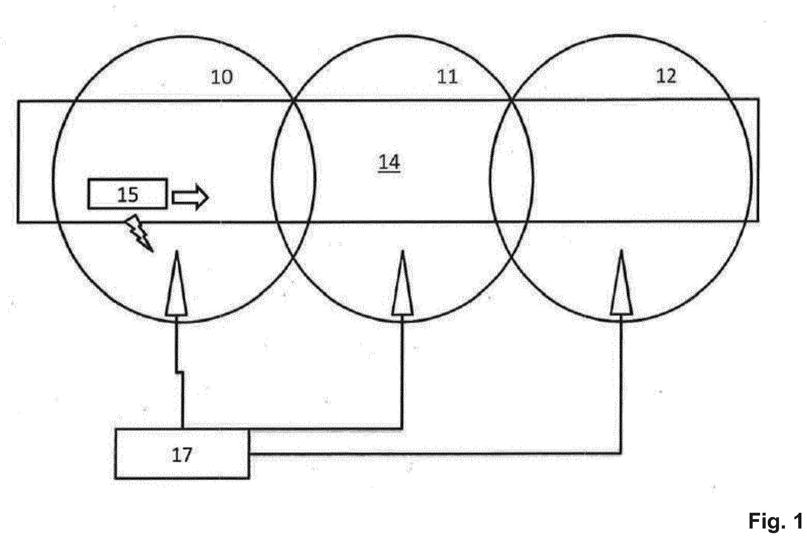

Figur 1 zeigt eine schematische Darstellung einer Straße, entlang der ein Mobilfunkendgerät in einem Fahrzeug in einem zellularen Mobilfunknetz bewegt wird, wobei eine Ausführungsform des erfindungsgemäßen Verfahrens mithilfe einer Ausführungsform des erfindungsgemäßen Systems durchgeführt wird.

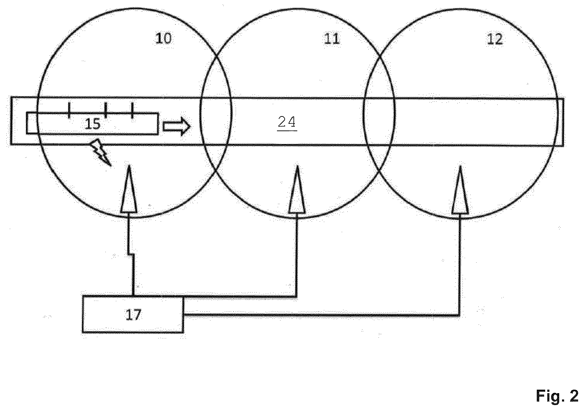

Figur 2 zeigt eine schematische Darstellung einer Schienenstrecke, entlang der ein Mobilfunkendgerät in einem Zug in einem zellularen Mobilfunknetz bewegt wird, wobei eine weitere Ausführungsform des erfindungsgemäßen Verfahrens mithilfe einer weiteren Ausführungsform des erfindungsgemäßen Systems durchgeführt wird.

Die Figuren werden übergreifend beschrieben; gleichen Komponenten sind gleiche Bezugszeichen zugeordnet.

Figur 1 zeigt nun exemplarisch das mindestens eine Mobilfunkendgerät 15, das sich aktuell in einer ersten Zelle 10 eines externen zellularen Mobilfunknetzes, das eine Vielzahl von Zellen 10, 11, 12 umfasst, befindet. Das Mobilfunkendgerät 15 offenbart der ersten Zelle 10 des zellularen Mobilfunknetzes seine aktuellen Standortdaten. Diese können auch aus GPS-Daten nach einem Triangulationsverfahren durch das Mobilfunkendgerät annährend bestimmt werden. Die zentrale Systemsteuerung des Mobilfunknetzes ist für die Verarbeitung der Standortdaten und der Übertragung der Standortdaten auf hinterlegte Umgebungskarten zuständig. Ferner wird auch eine Geschwindigkeit des bewegten Mobilfunkendgeräts 15 bestimmt. Diese so ermittelten Daten werden von einer zentralen Einheit 17 des Mobilfunknetzes, wobei es sich dabei vorzugsweise um ein HLR handeln kann, verarbeitet und auf hinterlegte Umgebungskarten übertragen und dadurch mit den aus den Umgebungskarten stammenden geographischen Daten abgeglichen. Die geographischen Daten bzw. die Umgebungskarten können dabei von einem bspw. von der zentralen Einheit 17 umfassten Speicher abgerufen werden. Anhand dieses Abgleichs kann eine Vorhersage, d. h. eine Prädiktion, also eine Vorausberechnung mit Wahrscheinlichkeiten für den Eintritt eines vorbezeichneten Bewegungsmusters, hier entlang einer Straße 14, berechnet werden. Daraus kann bspw. bestimmt werden, dass das Mobilfunkendgerät 15, welches in einem Fahrzeug mitgeführt wird, sehr wahrscheinlich dann entlang der Straße 14 bewegt wird, wenn dieses sich mit einer bestimmten, für Autofahrten üblichen Geschwindigkeit bewegt. Besteht eine Mobilfunkverbindung ausgehend von dem Mobilfunkendgerät 15, welches sich aktuell in der ersten Zelle 10 befindet, so wird eine Qualität der Mobilfunkverbindung in der ersten Zelle 10 mittels mindestens eines Parameters signalisiert. Dabei zeichnet die aktuelle erste Zelle 10 den Standort und Bewegungsparameter des Mobilfunkendgeräts 15 auf, wobei die Zelle 10 aufgrund der Daten des Standorts und der Bewegungsparameter eine Vorhersage über die potentiell nachgelagerten Mobilfunkzellen 11 und 12 vornimmt. Alternativ dazu kann auch die zentrale Einheit 17 Koordinaten eines Zellwechsel und einen Abgleich der Vorhersage mit den Bewegungsparametern und den Kommunikations-Verkehrsdaten des Mobilfunkendgeräts 15 vornehmen.

Aus den Kommunikations-Verkehrsdaten kann eine bisherige erforderte Bandbreite der Mobilfunkverbindung ausgehend von dem Mobilfunkendgerät 15 festgestellt werden. Anhand der festgestellten Kommunikations-Verkehrsdaten werden sodann seitens der zentralen Einheit 17 in den potentiell nachgelagerten Zellen 11 und 12, die entlang der Straße 14, auf welcher sich das das Mobilfunkendgerät befördernde Fahrzeug bewegt, liegen und gemäß dem vorhergesagten Bewegungsmuster des Mobilfunkendgeräts 15 mit einer einen vorgegebenen Schwellenwert übersteigenden Wahrscheinlichkeit als nachgelagerte Zellen fungieren werden, d. h. die aktuelle Mobilfunkverbindung des Mobilfunkendgeräts 15 übernehmen werden, entsprechend Datenkapazitäten reserviert. Dadurch verringert sich die Gefahr, dass Kapazitäten knapp werden, wenn große Datenmengen z. B. in einem Streaming bei einem Zellwechsel weitergeleitet werden müssen, obwohl in einer der nachfolgenden Zellen 11 wegen zu hoher Zellauslastung zu wenig Kapazität für einen solchen Dienst ist, die nachfolgende Zelle 12 aber noch nicht erreichbar ist.

Damit es nicht zu einem Abbruch oder zu einer Verzögerung kommt, wird die nachgelagerte Zelle 11 mit den ermittelten Prädiktionsdaten der ersten Zelle 10 versorgt. In der Zelle 11 werden sodann Kapazitäten priorisiert, so dass bei einem Eintreffen des Mobilfunkendgeräts 15 hinreichende Kapazität in Form von zugewiesenen Funkkanälen, Zeitschlitzen auf der Seite einer Funkübertragung oder Datenkapazitäten auf der Seite eines Backbone-Netzes zur Verfügung steht. Dadurch wird Verbindungsabbrüchen und Verzögerungen in der Übertragung eines Datenstroms vorgebeugt. Zudem werden die Kapazitäten des zellularen Mobilfunknetzes besser ausgelastet.

Es ist auch denkbar, dass eine Sendeleistung oder eine Antennenausrichtung der nachgelagerten Zellen 11, 12 derart angepasst werden, dass die nachgelagerten Zellen 11, 12 entsprechend der Vorhersage eine verbesserte, weil planbare Abdeckung vorsehen.

Alternativ dazu ist es auch denkbar, dass das Mobilfunkendgerät zusammen mit anderen Mobilfunkendgeräten zeitgleich in einem Zug mit dem Internet verbunden ist. Dabei können die Mobilfunkendgeräte einzeln mit dem externen Mobilfunknetz, bspw. unter Nutzung eines Umsetzers, verbunden sein. Alternativ dazu ist eine Zelle in einem Zug ausgebildet, mit der die Mobilfunkendgeräte über ein WLAN in dem Zug verbunden sind. Die zuginterne Zelle verbindet dann die jeweiligen Verbindungen mit den einzelnen Mobilfunkendgeräten gebündelt an das externe Mobilfunknetz weiter.

Dieses kann über das externe zellulare Mobilfunknetz realisiert werden. Die Datenströme des internen Zugnetzes werden als zusammenfassender Datenstrom an das externe Mobilfunknetz übermittelt, welches dazu Kanäle oder Frequenzen bündelt und erweitere Kapazitäten für das hohe Datenaufkommen sicherstellt. Auch können Richtfunk oder Satellitenverbindungen zum Einsatzkommen, zum Beispiel in Tunneln oder in dünn besiedelten Gebieten mt schwacher Zelleninfrastruktur.

Figur 2 zeigt nun exemplarisch das mindestens eine Mobilfunkendgerät 15, das sich aktuell in einer ersten Zelle 10 eines externen zellularen Mobilfunknetzes, das eine Vielzahl von Zellen 10, 11, 12 umfasst, befindet. Das Mobilfunkendgerät 15 offenbart der ersten Zelle 10 des zellularen Mobilfunknetzes 15 seine aktuellen Standortdaten. Diese können auch aus GPS-Daten nach einem Triangulationsverfahren annährend bestimmt werden. Ferner wird auch eine Geschwindigkeit des bewegten Mobilfunkendgeräts 15 bestimmt. Diese so ermittelten Daten werden von einer zentralen Einheit 17, wobei es sich dabei vorzugsweise um ein HLR handeln kann, oder innerhalb der ersten Zelle 10 mit geographischen Daten abgeglichen. Die geographischen Daten können dabei von einem bspw. von der zentralen Einheit 17 umfassten Speicher abgerufen werden. Anhand dieses Abgleichs kann eine Vorhersage, d. h. eine Prädiktion, also eine Vorausberechnung mit Wahrscheinlichkeiten für den Eintritt eines vorbezeichneten Bewegungsmusters, hier entlang eines Schienenwegs 24, berechnet werden. Daraus kann bspw. bestimmt werden, dass das Mobilfunkendgerät 15, welches in einem Zug mitgeführt wird, sehr wahrscheinlich dann entlang des Schienenwegs 24 bewegt wird, wenn dieses sich mit einer bestimmten, für Zugfahrten üblichen Geschwindigkeit bewegt. Besteht eine Mobilfunkverbindung ausgehend von dem Mobilfunkendgerät 15, welches sich aktuell in der ersten Zelle 10 befindet, so wird eine Qualität der Mobilfunkverbindung in der ersten Zelle 10 mittels mindestens eines Parameters signalisiert. Dabei zeichnet die aktuelle erste Zelle 10 den Standort und Bewegungsparameter des Mobilfunkendgeräts 15 auf, wobei die Zelle 10 aufgrund der Daten des Standorts und der Bewegungsparameter eine Vorhersage über die potentiell nachgelagerten Mobilfunkzellen 11 und 12 vornimmt. Alternativ dazu kann auch die zentrale Einheit 17 Koordinaten eines Zellwechsel und einen Abgleich der Vorhersage mit den Bewegungsparametern und den Kommunikations-Verkehrsdaten des Mobilfunkendgeräts 15 vornehmen.

Aus den Kommunikations-Verkehrsdaten kann eine bisherige erforderte Bandbreite der Mobilfunkverbindung ausgehend von dem Mobilfunkendgerät 15 festgestellt werden. Anhand der festgestellten Kommunikations-Verkehrsdaten werden sodann seitens der zentralen Einheit 17 in den potentiell nachgelagerten Zellen 11 und 12, die entlang des Schienenwegs 24 des beförderten Mobilfunkendgeräts liegen und gemäß dem vorhergesagten Bewegungsmuster des Mobilfunkendgeräts 15 mit einer einen vorgegebenen Schwellenwert übersteigenden Wahrscheinlichkeit als nachgelagerte Zellen fungieren werden, d. h. die aktuelle Mobilfunkverbindung des Mobilfunkendgeräts 15 übernehmen werden, entsprechend Datenkapazitäten reserviert. Dadurch verringert sich die Gefahr, dass Kapazitäten knapp werden, wenn große Datenmengen z. B. in einem Streaming bei einem Zellwechsel weitergeleitet werden müssen, obwohl in einer der nachfolgenden Zellen 11 wegen zu hoher Zellauslastung zu wenig Kapazität für einen solchen Dienst ist, die nachfolgende Zelle 12 aber noch nicht erreichbar ist.

Bei Schnellzügen, bspw. bei Hochgeschwindigkeitszügen, kommt es, wenn die Züge mit entsprechend hoher Geschwindigkeit fahren, zu einem starken Doppler-Effekt, also zu Frequenzverschiebungen. Die Züge können zum Teil Geschwindigkeiten >300 km/h, insbesondere bis zu 430 km/h erreichen. Allerdings kann der Doppler-Effekt durch die erfindungsgemäß vorgesehene Vorhersage der potentiell nachgelagerten Zellen und der damit einhergehenden Vorplanung eines vorzunehmenden Handovers der mindestens einen Mobilfunkverbindung mittels einer Freigabe von Kapazitäten in den potentiell nachgelagerten Zellen ausgeblendet werden, indem bspw. Funksignale nur von einer Richtung, zum Beispiel frontal auf den Zug gerichtet, einstrahlen und ein Zellwechsel vorgenommen wird, bevor der Zug an der Basisstation der ersten Zelle vorbeifährt, wodurch nämlich dann der Doppler-Effekt ausgeprägt werden könnte.

Zudem lassen sich bereits Frequenzspektren in den potentiell nachgelagerten Zellen reservieren, um dem dann vorbeifahrenden Zug einen breitbandigen Frequenzraum burstartig zuzuweisen. Dadurch kann eine Übergabe großer Datenmengen bei einer minimalen Latenzzeitverzögerung realisiert werden.

Das erfindungsgemäße Verfahren und das erfindungsgemäße System sind auch in bzw. für andere Fahrzeuge mit vielen Fahrgästen einsetzbar. Ein erfindungsgemäß vorgeplantes Handover lässt sich bspw. auch auf Flugzeuge oder Busse anwenden.

## Patentansprüche

1. Verfahren zur Übergabe mindestens einer Mobilfunkverbindung von einer ersten Zelle (10) zu einer der ersten Zelle (10) nachgelagerten Zelle (11, 12) in einem zellularen Mobilfunknetz mit einer Vielzahl von Zellen (10, 11, 12), bei dem die Mobilfunkverbindung von einem sich bewegenden und sich aktuell in der ersten Zelle (10) des Mobilfunknetzes befindenden Mobilfunkendgerät (15) gehalten wird, wobei das Verfahren mindestens die folgenden Schritte umfasst:
- Signalisieren der mindestens einen Mobilfunkverbindung in der ersten Zelle (10) mittels mindestens eines Parameters,
- Aufzeichnen eines Standorts und mindestens eines Bewegungsparameters des Mobilfunkendgeräts (15) in der ersten Zelle (10),
- auf Basis des aufgezeichneten Standorts und des mindestens einen aufgezeichneten Bewegungsparameters und eines Datenvolumens der mindestens einen Mobilfunkverbindung, Vorhersagen von mindestens einer potentiell nachgelagerten Zelle (11, 12) für deren Kapazitätsplanung.

2. Verfahren nach Anspruch 1, bei dem die Vorhersage der mindestens einen potentiell nachgelagerten Zelle (11, 12) auf Basis einer Vorhersage eines Bewegungsmusters des Mobilfunkendgeräts (15) vorgenommen wird.

3. Verfahren nach einem der voranstehenden Ansprüche, bei dem Kommunikations-Verkehrsdaten über eine durch die mindestens eine Mobilfunkverbindung belegte Bandbreite und eine Qualität der Mobilfunkverbindung aufgenommen und an die mindestens eine potentiell nachgelagerte Zelle (11, 12) übergeben werden, die gemäß der Vorhersage in einer auf Basis des aufgezeichneten Standorts und der aufgezeichneten Bewegungsparameter ermittelten wahrscheinlichen Bewegungsrichtung und in einer entsprechend wahrscheinlichsten Zellübergabezeit liegt.

4. Verfahren nach einem der voranstehenden Ansprüche, bei dem die mindestens eine potentiell nachgelagerte Zelle (11, 12) eine Kapazität gemäß der Vorhersage bereitstellt, um bei Eintritt einer Übernahme der Mobilfunkverbindung eine garantierte Qualität der mindestens einen Mobilfunkverbindung bereitzustellen.

5. Verfahren nach einem der voranstehenden Ansprüche, bei dem die Vorhersage der mindestens einen potentiell nachgelagerten Zelle (11, 12) auf Basis einer Vorhersage eines Bewegungsmusters des Mobilfunkendgeräts (15) und die jeweilige Kapazitätsplanung für die mindestens eine potentiell nachgelagerte Zelle (11, 12) alternativ oder zusätzlich zu der ersten Zelle (10) von einer zentralen Einheit (17) vorgenommen wird.

6. Verfahren nach Anspruch 5, bei dem eine jeweilige gemäß der Vorhersage für die mindestens eine potentiell nachgelagerte Zelle (11, 12) bereitzustellende Kapazität durch die zentrale Einheit (17) gesteuert und bereitgestellt wird, um bei Eintritt einer Übernahme der Mobilfunkverbindung eine garantierte Qualität der mindestens einen Mobilfunkverbindung bereitzustellen.

7. Verfahren nach einem der Ansprüche 2 bis 6, bei dem zur Vorhersage des Bewegungsmusters des Mobilfunkendgeräts (15) geografische Daten von einem das Mobilfunkendgerät (15) umgebenden Umfeld verwendet werden.

8. Verfahren nach Anspruch 7, bei dem die geografischen Daten von einer abrufbar hinterlegten Umgebungskarte, insbesondere einer Straßen- oder Schienennetzkarte abgeleitet werden.

9. System zur Steuerung einer Übergabe mindestens einer in einem zellularen, eine Vielzahl von Zellen (10, 11, 12) umfassenden Mobilfunknetz bestehenden Mobilfunkverbindung von einer ersten Zelle (10) zu einer nachgelagerten Zelle (11, 12), wobei die Mobilfunkverbindung von einem Mobilfunkendgerät (15) in einem Fahrzeug ausgeht, wobei das System mindestens eine erste Funktionseinheit, die dazu ausgelegt ist, Signale zu einem Standort und Bewegungsparametern des Mobilfunkendgeräts (15) sowie zu Kommunikations-Verkehrsdaten der Mobilfunkverbindung aufzuzeichnen, und mindestens eine zweite Funktionseinheit, die dazu konfiguriert ist, auf Basis des aufgezeichneten Standorts und der aufgezeichneten Bewegungsparameter und eines Datenvolumens der mindestens einen Mobilfunkverbindung eine Vorhersage von potentiell nachgelagerten Zellen (11, 12) für deren jeweilige Kapazitätsplanung vorzunehmen, umfasst.

10. System nach Anspruch 9, bei dem die mindestens eine erste Funktionseinheit und/oder die mindestens eine zweite Funktionseinheit eine zentrale Einheit (17) ist, die ferner dazu ausgelegt ist, den jeweiligen gemäß Vorhersage nachgelagerten Zellen eine jeweilige Kapazität zuzuweisen, um bei Eintritt einer Übernahme der Mobilfunkverbindung eine garantierte Qualität der mindestens einen Mobilfunkverbindung bereitzustellen.

11. System nach Anspruch 9 oder 10, bei dem die mindestens eine erste Funktionseinheit und die mindestens eine zweite Funktionseinheit in einer übergeordneten Einheit zusammengeführt sind.

12. System nach Anspruch 10 oder 11, bei dem die zentrale Einheit (17) ein HLR ist.

13. System nach einem der Ansprüche 9 bis 12, bei dem das Fahrzeug ausgewählt ist aus der Gruppe umfassend einen Zug, ein Flugzeug, einen Bus, ein Personenfahrzeug.
